# EUROPÄISCHE PATENTANMELDUNG

(11) **EP 4 015 123 A1**
(43) Veröffentlichungstag der Anmeldung: **22.06.2022**
(21) Anmeldenummer: 20215610.5
(22) Anmeldetag: 18.12.2020
(51) Int. Cl.: B23C 5/10

(54) **VOLLFRÄSWERKZEUG ZUR ROTIERENDEN MATERIALBEARBEITUNG**

(71) Anmelder: Fraisa SA, 4512 Bellach (CH)
(72) Erfinder: MAUSHART, Josef, 4500 Solothurn (CH); KAMMERMEIER, Dirk, 4500 Solothurn (CH); SENN, Stefan, 3296 Arch (CH)
(74) Vertreter: Keller Schneider Patent- und Markenanwälte AG

(57) **Zusammenfassung**

Ein Vollfräswerkzeug (10) zur rotierenden Materialbearbeitung weist einen länglichen Werkzeugschaft auf, mit einem Arbeitsbereich (13), in dem Schneiden (17.1, 17.2, 17.3) mit zugehörigen Spanflächen (20) und bezüglich einer Drehrichtung hinter den Schneiden (17.1, 17.2, 17.3) angeordnete Freiflächen (22) vorhanden sind. Jede der Schneiden (17.1, 17.2, 17.3) umfasst einen mantelseitigen Hauptschneidenbereich und einen stirnseitigen Nebenschneidenbereich, wobei an wenigstens einer Schneide (17.1, 17.2, 17.3) im Hauptschneidenbereich auf der zugehörigen Freifläche (22) eine Freiflächenfase (30) ausgebildet ist. Im Hauptschneidenbereich nimmt eine Breite (bStf1, bStf2) der Freiflächenfase (30) ausgehend von einem vorderen Teilbereich bis zu einem an ein hinteres Ende des Arbeitsbereichs (13) angrenzenden hinteren Teilbereich ab. Das Vollfräswerkzeug (10) ermöglicht die Bearbeitung filigraner Bauteile oder Bauteilabschnitte mit kleinen Wandstärken unter Einhaltung der vorgegebenen Masstoleranzen bei hohen Drehzahlen und Vorschüben.

## Beschreibung

### Technisches Gebiet

Die Erfindung betrifft ein Vollfräswerkzeug zur rotierenden Materialbearbeitung mit einem länglichen Werkzeugschaft, der einen Arbeitsbereich aufweist, in welchem Schneiden mit zugehörigen Spanflächen und bezüglich einer Drehrichtung hinter den Schneiden angeordnete Freiflächen vorhanden sind, wobei jede der Schneiden einen mantelseitigen Hauptschneidenbereich und einen stirnseitigen Nebenschneidenbereich umfasst, wobei an wenigstens einer Schneide im Hauptschneidenbereich auf der zugehörigen Freifläche eine Freiflächenfase ausgebildet ist. Die Erfindung betrifft weiter ein Verfahren zur Herstellung eines Vollfräswerkzeugs.

### Stand der Technik

Fräswerkzeuge wie beispielsweise Schaftfräser weisen üblicherweise mehrere Zähne auf. Diese verlaufen um einen azimutalen Winkel zueinander versetzt jeweils wendelförmig um eine Längsachse des Fräsers. An jedem Zahn ist eine Schneide mit einer Spanfläche ausgebildet, welche das Spangut von der Schneide weg leitet. An jede Spanfläche schliesst sich unter einem Keilwinkel eine Freifläche an. Diese Freiflächen sind also bezüglich der Drehrichtung hinter den Schneiden angeordnet. Sie weisen gegenüber dem Rohlingkreisumfang, aus dem der Arbeitsbereich des Schaftfräsers herausgearbeitet ist, einen Freiwinkel auf. Das heisst, an den einzelnen Freiflächen sind die Werkzeugschneiden gegenüber dem Rohlingkreisumfang hinterschliffen, damit während des Fräsvorschubs ein Festsetzen des Fräsers in dem Werkstück vermieden wird. Um ein Festsetzen sicher zu verhindern, muss die Freifläche gegenüber der Rohlingumfangsfläche einen gewissen Mindest-Freiwinkel aufweisen.

Um Kosten für die Erneuerung eines Fräswerkzeugs zu verringern, sind Fräswerkzeuge und andere zur spanenden Bearbeitung von Werkstücken vorgesehene Werkzeuge häufig mit ein oder mehreren auswechselbaren Schneidplatten bestückt, die eine gewisse begrenzte Standzeit haben und von Zeit zu Zeit vergleichsweise einfach und kostengünstig ausgewechselt werden können. Schneidplatten weisen aber eine vergleichsweise geringe Fertigungspräzision auf. Ein bevorzugtes Anwendungsgebiet von Schneidplatten liegt daher im Bereich des Drehens, bei welchem das Werkzeug feststeht und somit vergleichsweise einfach und genau zu positionieren ist, während das Werkstück rotiert wird. Ein Schnitt des Werkzeugs wird dabei nicht laufend unterbrochen (wie es beim Fräsen der Fall ist), sondern es wird weitgehend kontinuierlich ein Span vom Werkstück abgezogen. Damit werden gänzlich andere Anforderungen an eine Werkzeugschneide gestellt als beim Präzisionsfräsen. Bei einer rotierenden Materialbearbeitung, bei der das Werkzeug rotiert wird und das Werkstück feststeht, kommen schneidplattenbesetzte Werkzeuge daher beispielsweise hauptsächlich beim Schruppen bzw. bei vergleichsweise grober räumender Bearbeitung zur Anwendung, bei welcher keine besondere Präzision erforderlich ist. Für eine Präzisions- bzw. Feinbearbeitung von Werkstücken sind Fräswerkzeuge mit Schneidplatten nicht geeignet. Zudem müssen schneidplattenbesetzte Fräswerkzeuge eine gewisse Mindestgrösse bzw. einen gewissen Mindestdurchmesser aufweisen, damit die Schneidplatten aufgenommen bzw. gehalten werden können. Mögliche Durchmesser liegen dabei typischerweise oberhalb von ca. 16 mm. Der Einsatzbereich derartiger Werkzeuge ist damit neben der vergleichsweise geringen Präzision auch durch die Grösse der Werkzeuge eingeschränkt.

Für eine Präzisions- bzw. Feinbearbeitung kommen Vollfräswerkzeuge zur Anwendung, d. h. Fräswerkzeuge, bei welchen die spanabhebenden Schneiden am Werkzeugkörper selbst ausgebildet sind. Vollfräswerkzeuge können auf allen Grössenskalen z. B. aus Schnellarbeitsstahl (HSS) sowie aus Hartmetall, Keramik oder Cermet sowie aus sämtlichen weiteren bekannten Materialien für Fräswerkzeuge gefertigt sein. Verschlissene Schneiden an Vollfräsern können durch Nachschleifen für den weiteren Gebrauch aufgearbeitet werden. Ist dies nicht mehr möglich, muss das gesamte Werkzeug entsorgt werden. Eine Verlängerung der Standzeit bzw. eine Verbesserung der Verschleisseigenschaften von Vollfräswerkzeugen ist daher besonders wünschenswert.

Für eine präzise Bearbeitung und eine hohe Standzeit der Werkzeuge ist es unter anderem wichtig, dass bei deren Einsatz möglichst wenig störende Vibrationen auftreten. Ein Mittel, um derartige Vibrationen zu reduzieren, ist die gezielte Dimensionierung der oben erwähnten Freiflächen.

So zeigt die WO 2006/046278 A1 (OSG) einen Eckradius-Schaftfräser aus Voll-Hartmetall mit einem Werkzeugdurchmesser D. Schneidkanten erstrecken sich vom Mantel über den Radiusbereich bis auf die Stirnseite. Zur Unterdrückung von Vibrationen ist entlang der mantelseitigen Hauptschneiden eine Freifläche mit einem Freiwinkel von 0-3° vorgesehen, deren Breite 0,005 - 0,03 D beträgt; der Helixwinkel aller Schneidkanten ist untereinander gleich und beträgt 35 bis ca. 40°. Die maximale Höhenrauigkeit auf den Oberflächen der spiralförmigen Rillen beträgt 2 µm oder weniger.

Die EP 2 093 003 A1 (Fraisa Holding AG) zeigt ebenfalls ein Vollfräswerkzeug, bei welchem mantelseitig Schneiden mit zugehörigen Spanflächen und bezüglich einer Drehrichtung hinter den Schneiden angeordnete Freiflächen ausgebildet sind. An wenigstens einer der Schneiden ist auf der zugehörigen Freifläche eine Freiflächenfase ausgebildet. Diese Freiflächenfase (oder Stützfase) generiert im Betrieb Kräfte, durch welche das Werkzeug besser am Werkstück abgestützt und dadurch stabilisiert wird. Ein Freiflächenabschnitt ist mit einer glättenden Oberflächenbehandlung versehen, so dass die Rauheit in diesem Abschnitt kleiner ist als die Rauheit der übrigen Freifläche.

Mit den vorgeschlagenen Massnahmen lassen sich die Vibrationen bis zu einem gewissen Grad eindämmen. Gerade beim Fräsen von Integralbauteilen aus beispielsweise Aluminium, bei welchem hohe Drehzahlen und Vorschübe gefahren werden, traten aber noch immer Vibrationen auf, welche den Bearbeitungsvorgang störten und zu einer Verkürzung der Werkzeuglebensdauer führten.

Die Anmelderin der vorliegenden Anmeldung hat deshalb im Rahmen der EP 2 848 342 B1 (Fraisa Holding AG) für Eckradiusfräser vorgeschlagen, die Freiflächenfase so auszubilden, dass sie in einem Bereich, der sich von der Hauptschneide über den Radiusbereich zur Nebenschneide erstreckt, einen stufenlosen Verlauf und eine Breite in einem vorgegebenen, vom Werkzeugdurchmesser abhängigen, Bereich aufweist.

Dadurch liess sich das Vibrationsverhalten deutlich verbessern, was zu einer Verbesserung des Arbeitsergebnisses und einer Erhöhung der Standzeit führte.

Es hat sich allerdings gezeigt, dass, insbesondere bei grossen Bearbeitungstiefen mit langen Werkzeugen, die Masshaltigkeit beeinträchtigt sein konnte, weil der Materialabtrag nicht entlang des gesamten Arbeitsbereichs gleichmässig erfolgte.

### Darstellung der Erfindung

Aufgabe der Erfindung ist es, ein dem eingangs genannten technischen Gebiet zugehörendes Vollfräswerkzeug zu schaffen, das eine verbesserte Masshaltigkeit bei geringer Vibrationsentwicklung ermöglicht.

Die Lösung der Aufgabe ist durch die Merkmale des Anspruchs 1 definiert. Gemäss der Erfindung nimmt im Hauptschneidenbereich eine Breite der Freiflächenfase ausgehend von einem vorderen Teilbereich bis zu einem an ein hinteres Ende des Arbeitsbereichs angrenzenden hinteren Teilbereich ab.

Mit Vorteil erstreckt sich der Freiflächenfasenbereich über den gesamten Hauptschneidenbereich und den gesamten Nebenschneidenbereich. Es ist aber im Rahmen der Erfindung auch möglich, dass nur Bereiche der Freiflächen die Fase aufweisen. Der vordere Teilbereich grenzt bei einem Eckradius-Schaftfräser an den Radiusbereich an, bei einem zylindrischen Fräser direkt an die Stirnfläche. Als vorderer Teilbereich wird beispielsweise ein Bereich der Hauptschneide verstanden, der sich über maximal 10% der Hauptschneide erstreckt, gemessen in axialer Richtung. Der hintere Teilbereich grenzt an den Schaft an und schliesst das schaftseitige Ende der Hauptschneidkante ein. Auch der hintere Teilbereich erstreckt sich beispielsweise über maximal 10% der Hauptschneide, gemessen in axialer Richtung.

Ebenfalls mit Vorteil ist die erfindungsgemässe Freiflächenfase an sämtlichen Schneiden ausgebildet, z. B. an sämtlichen Schneiden eines 2- oder 3-schneidigen Fräswerkzeugs. Es ist jedoch im Rahmen der Erfindung auch möglich, die Freiflächenfase nur an einer oder einem Teil der vorhandenen Schneiden auszubilden und/oder die Ausdehnung des Freiflächenfasenbereichs bei den verschiedenen Schneiden unterschiedlich zu wählen.

Im Folgenden ist ohne Einschränkung der Allgemeinheit die Erfindung anhand von Werkzeugen beschrieben, bei welchen sämtliche Schneiden mit der erfindungsgemässen Freiflächenfase versehen sind. Die im Rahmen der Erfindung beschriebenen Merkmale und Abwandlungen lassen sich aber jeweils auch auf Werkzeuge übertragen, bei welchen nur einige der Schneiden die erfindungsgemässe Gestaltung aufweisen. Ferner kann die spezifische Ausgestaltung der Freiflächenfase bei den verschiedenen Schneiden eines Werkzeugs unterschiedlich sein.

Bevorzugt geht die Freiflächenfase im gesamten Freiflächenfasenbereich in genau einer zur wenigstens einen Schneide - bis auf die Änderung der Fasenbreite - weitgehend parallelen Kante in einen angrenzenden Bereich der zugehörigen Freifläche über.

Der Kerndurchmesser der erfindungsgemässen Schaftwerkzeuge beträgt bevorzugt mindestens 0.55 d1.

Das Werkzeug ist mit Vorteil aus Voll-Hartmetall hergestellt. Es kann eine Beschichtung aufweisen.

Weil die Freiflächenfase im Bereich der Hauptschneidkante, der an die Stirnseite angrenzt, höher ist als in einem schaftseitigen Bereich, ergibt sich vorne (stirnseitig) ein höherer Schneiddruck des Werkzeugs auf das Werkstück als hinten (schaftseitig). Bei vielen Fräsvorgängen ist die vom stirnseitigen Bereich der Hauptschneide kontaktierte Region des in Bearbeitung befindlichen Werkstücks mit einer Bodenfläche verbunden und dadurch gegen laterale Auslenkungen stabilisiert. Dies gilt nicht für die Region, die vom schaftseitigen Bereich der Hauptschneide kontaktiert wird - diese lässt sich oft durch deutlich geringere Kräfte in lateraler Richtung auslenken. Entsprechend sorgt die Reduktion des Drucks im schaftseitigen Bereich aufgrund geringerer lokaler Kräfte und aufgrund eines insgesamt reduzierten Biegemoments für geringere Auslenkungen und damit eine bessere Masshaltigkeit des Werkstücks (z. B. in Bezug auf eine vorgegebene Stegbreite), insbesondere bei dünnwandigen Werkstücken oder dünnwandigen Stegen von Werkstücken.

Weil dazu aufgrund der sich ändernden Fasenbreite nicht die Breite entlang der gesamten Freiflächenfase reduziert werden muss, kann die für ein vibrationsarmes Arbeiten benötigte Abstützkraft dennoch bereitgestellt werden. Zur Sicherstellung einer ausreichenden Abstützung kann auch die Fasenbreite im Bereich der Stirn etwas grösser sein als bei einem Werkzeug mit konstanter Hauptschneiden-Fasenbreite. Die Standzeit der Werkzeuge ist somit vergleichbar.

Versuche mit erfindungsgemässen Werkzeugen haben gezeigt, dass sie allesamt ein gutes Arbeitsverhalten mit geringen Vibrationen haben und ein gutes Arbeitsergebnis bei der Bearbeitung von Aluminium-Integralbauteilen liefern. Die Masshaltigkeit ist gegenüber Vergleichswerkzeugen mit entlang der Hauptschneide konstanter Freiflächenfasenbreite verbessert. Anforderungen an die Rauigkeit der bearbeiteten Oberfläche werden eingehalten. Entsprechend lassen sich auch filigranere Bauteile mit kleinen Wandstärken unter Einhaltung der vorgegebenen Masstoleranzen bei hohen Drehzahlen und Vorschüben fräsen.

Die Erfindung ist somit besonders vorteilhaft bei langen Schaftwerkzeugen, bei denen eine axiale Länge des Arbeitsbereichs mindestens das 4-fache eines Werkzeugdurchmessers d1 beträgt. Dort sind Probleme bei der Masshaltigkeit aufgrund der grossen (möglichen) Arbeitstiefe besonders ausgeprägt. Solche Werkzeuge sind insbesondere zum Schlichten von hohen Wänden in einem Vorgang ("one-shot") geeignet. Die Erfindung lässt sich aber auch mit Vorteil bei kürzeren Schaftwerkzeugen einsetzen, z. B. solchen mit einer axialen Länge des Arbeitsbereichs von lediglich 2 d 1.

Das erfindungsgemässe Vollfräswerkzeug ist insbesondere zur Herstellung von Integralbauteilen geeignet, besonders solchen aus Aluminium, insbesondere Aluminium-Knetlegierungen oder Aluminiumguss. Es lässt sich aber auch zur Bearbeitung anderer Werkstoffe wie z. B. Kupferlegierungen, Stahl, Inox, Titan oder auch Kunststoffen, insbesondere Thermoplaste, einsetzen.

Mit Vorteil wird das erfindungsgemässe Vollfräswerkzeug durch ein Verfahren hergestellt, bei dem in einem Arbeitsbereich Schneiden mit zugehörigen Spanflächen und bezüglich einer Drehrichtung hinter den Schneiden angeordnete Freiflächen erzeugt werden, wobei jede der Schneiden einen mantelseitigen Hauptschneidenbereich und einen stirnseitigen Nebenschneidenbereich umfasst, wobei an wenigstens einer Schneide im Hauptschneidenbereich auf der zugehörigen Freifläche eine Freiflächenfase ausgebildet wird. Die Freiflächenfase wird derart erzeugt, dass im Hauptschneidenbereich eine Breite der Freiflächenfase ausgehend von einem vorderen Teilbereich bis zu einem an ein hinteres Ende des Arbeitsbereichs angrenzenden hinteren Teilbereich abnimmt.

Besonders bevorzugt wird nun die Freiflächenfase durch konventionelles Schleifen erzeugt, d. h. mit einem herkömmlichen Schleifwerkzeug mit einer runden Schleifscheibe. Dies zum einen im Gegensatz zu einer Rundschlifffase, bei welcher der ursprüngliche Querschnitt stehengelassen bleibt, - dies ist bei der Geometrie des Werkzeugs nicht im gesamten Freiflächenfasenbereich möglich -, sowie zum anderen im Gegensatz zum radialen Schleifen.

Mit Vorteil wird die Freiflächenfase in einem letzten Schritt der Werkzeugprofilierung hergestellt, also nachdem die übrigen Aspekte der Schneidengeometrie erzeugt worden sind. Ausgehend von einem Hartmetall-Rohling wird dieser also zunächst rundgeschliffen, um die einzelnen Abschnitte auf ihren Normaldurchmesser zu bringen. Anschliessend erfolgt das Schärfen: Durch entsprechende Schleifvorgänge werden die Schneidgeometrie, die Spannuten etc. eingebracht. Erst dann erfolgt das konventionelle Schleifen der Freiflächenfase.

Durch konventionelles Schleifen lässt sich eine Freiflächenfase mit den erfindungsgemässen Eigenschaften zuverlässig und wirtschaftlich erzeugen.

Mit Vorteil ist ein Verhältnis der Breite der Freiflächenfase im hinteren Teilbereich zur Breite im vorderen Teilbereich 0.85 oder kleiner, insbesondere liegt das Verhältnis im Bereich 0.5-0.8.

Es hat sich gezeigt, dass sich bei solchen Verhältnissen bei typischen Werkstücken eine gute Korrelation zwischen reduziertem Schneiddruck und erhöhter lateraler Auslenkbarkeit ergibt. Auch die Gesamtabstützung lässt sich gewährleisten, ohne dass im stirnseitigen Bereich zu hohe Kräfte generiert werden.

Mit Vorteil beträgt ein Verhältnis der Breite der Freiflächenfase im vorderen Teilbereich zu einem Werkzeugdurchmesser 0.005-0.012. Es hat sich gezeigt, dass bei kleineren Breiten ein zu geringer Abstützeffekt resultiert. Bei grösseren Breiten werden die vom Werkstück über die Freiflächenfase auf das Werkzeug ausgeübten Kräfte zu stark und sowohl das Werkzeug als auch das Werkstück können beschädigt werden. Bei grösseren Werkstückdurchmessern wird bevorzugt darauf geachtet, dass die Breite der Freiflächenfase im vorderen Bereich 200 µm nicht übersteigt. So wird eine Verschlechterung des Verhaltens des Werkzeugs im Betrieb aufgrund einer zu breiten Fase vermieden.

Bevorzugt nimmt die Breite der Freiflächenfase vom vorderen Teilbereich zum hinteren Teilbereich linear ab, dies innerhalb der jeweiligen Fertigungstoleranzen. Dadurch ergibt sich eine gleichmässige Verteilung der Abstützkräfte ohne lokale Maxima oder Minima.

Bei einem Eckradius-Fräser findet diese lineare Abnahme insbesondere ausgehend vom Übergang zwischen dem Radiusbereich in den Hauptschneidenbereich bis zum Ende der Schneidkante statt.

Anstelle einer linearen Abnahme kann die Breite ausgehend vom vorderen Teilbereich auch gemäss einer anderen monoton fallenden Funktion abnehmen, wobei auch Abschnitte mit konstanter Fasenbreite möglich sind.

Bevorzugt liegt ein Freiwinkel der Freiflächenfase im Hauptschneidenbereich im Bereich von 0.5 bis 2.0°, insbesondere im Bereich von 0.75 bis 1.75°. Der Freiwinkel ist besonders bevorzugt im Wesentlichen konstant. Die Toleranzen sind mit Vorteil so bemessen, dass der vorgegebene Nominalwert für den Freiwinkel nicht unterschritten wird, nach oben ist eine Toleranz von beispielsweise 1° vertretbar und herstellungstechnisch umsetzbar.

Bei einer bevorzugten Ausführungsform umfasst jede der Schneiden einen den Hauptschneidenbereich mit dem Nebenschneidenbereich verbindenden Radiusbereich, und die Freiflächenfase setzt sich über eine Freifläche des Radiusbereichs in die Freifläche des Nebenschneidenbereichs fort. Dabei weisen in einem Freiflächenfasenbereich, der sich vom Hauptschneidenbereich über den Radiusbereich bis in den Nebenschneidenbereich erstreckt, sowohl ein Freiwinkel der Freiflächenfase als auch eine Breite der Freiflächenfase jeweils gemessen in einer lokalen Bezugsebene, welche senkrecht steht auf einer lokalen Tangente der Schneide, einen stufenlosen Verlauf auf.

Im Hauptschneidenbereich und im Nebenschneidenbereich entspricht die Definition des Freiwinkels und der Breite der Freiflächenfase den üblichen Definitionen mit Bezugsebenen, die entlang der entsprechenden Schneidkanten jeweils eine fest vorgegebene Orientierung haben. Im Radiusbereich hingegen ändert sich die Orientierung der oben definierten Bezugsebene zusammen mit dem Verlauf der Schneidkante, so dass eine Definition für den Winkel und die Breite der Freiflächenfase erhalten wird, welche entlang der gesamten Schneide gültig ist, insbesondere auch an den Übergängen zwischen Mantel und Radius bzw. zwischen Radius und Stirnfläche. Im Rahmen der Definition wird bei verrundeten Schneidkanten der Schnittpunkt der Tangenten an die Stützfase und die Spanfläche als "Schneide" aufgefasst, zu welcher zur Angabe der lokalen Bezugsebene die lokale Tangente zu bilden ist.

Eckradius-Schaftfräser eignen sich besonders gut sowohl für die Bearbeitung in axialer als auch in radialer Richtung und damit insbesondere auch zur Herstellung von Integralbauteilen. Solche Werkzeuge haben einen länglichen Werkzeugschaft, der einen Arbeitsbereich aufweist, in welchem Schneiden mit zugehörigen Spanflächen vorhanden sind, wobei jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst. Die Geometrie des Eckradius-Schaftfräsers wird so gewählt, dass beim Fräsen sanfte Übergänge im Werkstück erzeugt werden können.

Unter einem "stufenlosen Verlauf" wird verstanden, dass sich sowohl der Freiwinkel als auch die Breite der Freiflächenfase gemäss obiger Definition in Funktion der Schneidenposition stetig und differenzierbar verhalten, dass also keine Sprünge oder Kanten auftreten.

Im Bereich der Hauptschneide kann die Freiflächenfase aufgrund des Anbringens von Spanteilern unterbrochen sein. Die Spanteiler bewirken eine Unterbrechung der Spanbildung und ermöglichen so ein besseres und sichereres Spanhandling und zwar sowohl bei der Spanabfuhr vom Bauteil, vom Werkzeugmaschinentisch als auch im Spanförderer.

Der Freiwinkel der Freiflächenfase und/oder die Breite der Freiflächenfase können im Nebenschneidenbereich, im Radiusbereich und im Hauptschneidenbereich unterschiedlich vorgegeben sein. Gerade im Radiusbereich können sich aus fertigungstechnischen Gründen zudem grössere Abweichungen von Sollwerten ergeben als im Bereich der Haupt-und Nebenschneiden.

Für die Breite b der Freiflächenfase gilt bei einem Eckradius-Schaftfräser mit Vorteil im gesamten Freiflächenfasenbereich die Beziehung
0.003 d1 < b <0.015 d1,
wobei d1 den Werkzeugdurchmesser des Vollfräswerkzeugs bezeichnet und wobei eine maximale Breite b der Freiflächenfase unabhängig vom Werkzeugdurchmesser den Wert von 200 µm nicht übersteigt.

Es hat sich gezeigt, dass bei kleineren Breiten zum einen ein zu geringer Abstützeffekt resultiert und zum anderen eine verlässliche Fertigung einer Fase mit stufenlosem Verlauf erschwert wird. Bei grösseren Breiten werden die vom Werkstück über die Freiflächenfase auf das Werkzeug ausgeübten Kräfte zu stark und sowohl das Werkzeug als auch das Werkstück können beschädigt werden. Wie ersichtlich ist die Breite b der Freiflächenfase grundsätzlich abhängig vom Durchmesser d1 des Werkzeugs, unabhängig von letzterem sollte aber eine Breite von 200 µm nicht überschritten werden, weil sich sonst das Verhalten des Werkzeugs im Betrieb unabhängig von dessen Durchmesser substanziell verschlechtert.

Bevorzugt weicht die Breite der Freiflächenfase bei einem Werkzeugdurchmesser d1 um nicht mehr als die Variation Δb von einem vorgegebenen Wert ab, wobei
Δb = 40 µm, falls d1 ≤ 6 mm,
Δb = 60 µm, falls 6 mm <d1 < 12 mm, und
Δb = 80 µm, falls d1 ≥ 12 mm.

Die Breite kann somit im Freiflächenfasenbereich zwar durchaus variieren, die Variation sollte aber die angegebenen Werte nicht überschreiten, zudem sollte die Variation so erfolgen, dass der stufenlose Verlauf im Sinn der Erfindung gewährleistet ist.

Im Hauptschneidensektor und im Nebenschneidensektor des Freiflächenfasenbereichs weicht die Breite der Freiflächenfase bei einem Werkzeugdurchmesser d1 zudem besonders bevorzugt um nicht mehr als die Variation Δb' von einem vorgegebenen Wert ab, wobei
Δb' = 15 µm, falls d1 ≤ 6 mm,
Δb' = 30 µm, falls 6 mm<d1 < 12 mm, und
Δb' = 40 µm, falls d 1 ≥ 12 mm,
und wobei eine Gesamtfläche der Freiflächenfase bei einem Radius r des Radiusbereichs um nicht mehr als einen Wert ΔA von einer Gesamtfläche einer Freiflächenfase gemäss den jeweiligen Nominalwerten abweicht, wobei
Δ A = 0.003 d 1·r, bevorzugt ΔA = 0.0025 d 1·r,
wobei der Freiflächenfasenbereich aus dem Hauptschneidensektor, einem ersten Übergangssektor, dem Radiussektor, einem zweiten Übergangssektor und dem Nebenschneidensektor zusammengesetzt ist, welche jeweils unmittelbar aufeinander folgen,
wobei sich der erste Übergangssektor über einen Bereich der Schneide erstreckt, welcher vor und nach einem ersten Punkt der Schneide, in welchem diese ausgehend vom Hauptschneidenbereich einen Mantel radial nach innen verlässt, eine Länge aufweist, die einer Winkeländerung von 20° der lokalen Tangente im Radiusbereich, angrenzend an den ersten Punkt entspricht, und
wobei sich der zweite Übergangssektor über einen Bereich der Schneide erstreckt, welcher vor und nach einem zweiten Punkt der Schneide, in welchem deren lokale Tangente ausgehend vom Hauptschneidenbereich erstmals einen rechten Winkel zu einer Werkzeugachse bildet, eine Länge aufweist, die einer Winkeländerung von 20° der lokalen Tangente im Radiusbereich, angrenzend an den zweiten Punkt entspricht.

Ferner weicht bevorzugt eine Gesamtfläche der Freiflächenfase bei einem Radius r des Radiusbereichs um nicht mehr als einen Wert ΔA von einer Gesamtfläche einer Freiflächenfase gemäss den vorgegebenen Nominalwerten ab, wobei
Δ A = 0.003 d 1·r, bevorzugt ΔA = 0.0025 d 1·r.

Dabei ergibt sich diese vorgegebene Gesamtfläche aus der Länge der Freiflächenfase und den vorgegebenen Nominalwerten für deren Breite.

Der Freiflächenfasenbereich ist definitionsgemäss aus dem Hauptschneidensektor, einem ersten Übergangssektor, dem Radiussektor, einem zweiten Übergangssektor und dem Nebenschneidensektor zusammengesetzt, welche jeweils unmittelbar aufeinander folgen. Der erste Übergangssektor erstreckt sich dabei über einen Bereich der Schneide, welcher vor und nach einem ersten Punkt der Schneide, in welchem diese ausgehend vom Hauptschneidenbereich einen Mantel radial nach innen verlässt, eine Länge aufweist, die einer Winkeländerung von 20° der lokalen Tangente im Radiusbereich, angrenzend an den ersten Punkt entspricht. Der zweite Übergangssektor erstreckt sich dabei über einen Bereich der Schneide, welcher vor und nach einem zweiten Punkt der Schneide, in welchem deren lokale Tangente ausgehend vom Hauptschneidenbereich erstmals einen rechten Winkel zu einer Werkzeugachse bildet, eine Länge aufweist, die einer Winkeländerung von 20° der lokalen Tangente im Radiusbereich, angrenzend an den zweiten Punkt entspricht.

Die gesamte abstützende Wirkung der Freiflächenfase hängt wesentlich von der Gesamtfläche der Freiflächenfase ab. Zusammen mit dem stufenlosen Verlauf der Fase und den erwähnten Toleranzen im Haupt- und Nebenschneidensektor stellt das Einhalten der erwähnten Flächentoleranz sicher, dass die Abstützwirkung bei sämtlichen im Betrieb auftretenden Arbeitsrichtungen innerhalb eines vorteilhaften Bereichs liegt.

Die Erfindung ist auch anwendbar bei Schaftfräsern mit einem zylindrischen Übergang.

Bei einer bevorzugten Ausführungsform ist ein Freiwinkel der Freiflächenfase im Nebenschneidenbereich kleiner als im Hauptschneidenbereich, wobei insbesondere der Freiwinkel im Nebenschneidenbereich im Bereich von 0 bis 1.5° liegt. Bei diesen Winkeln ergibt sich zuverlässig eine ausreichende Abstützung des Werkzeugs am Werkstück.

Bei einem Eckradius-Schaftfräser ändert sich der Winkel - soweit im Rahmen der Fertigungstoleranzen möglich - im Radiusbereich bevorzugt kontinuierlich.

In einer bevorzugten Ausführungsform wird im Bereich der Nebenschneide ein Freiwinkel Null angestrebt, während dort höhere Werte primär durch Fertigungstoleranzen bedingt sind.

Die Breite der Freiflächenfase im Nebenschneidenbereich kann der Breite der Freiflächenfase im vorderen Teilbereich des Hauptschneidenbereichs entsprechen. Je nach benötigter Abstützung auf der Stirnseite kann die dortige Freiflächenfasenbreite aber auch kleiner oder grösser als im vorderen Teilbereich des Hauptschneidenbereichs gewählt werden.

Bevorzugt ist ein Freiwinkel eines an die Freiflächenfase angrenzenden Bereichs der Freifläche im gesamten Freiflächenfasenbereich grösser als der Freiwinkel der Freiflächenfase, insbesondere liegt der Freiwinkel des angrenzenden Bereichs im Bereich von 6 bis 20°. Der angrenzende Bereich bewirkt somit keine eigentliche Abstützung des Werkzeugs am Werkstück. Dies ist der Freiflächenfase vorbehalten.

Mit Vorteil variiert der Freiwinkel des angrenzenden Bereichs im gesamten Freiflächenfasenbereich um nicht mehr als 4°. Es hat sich gezeigt, dass sich durch eine möglichst gleichbleibende Geometrie der Freifläche entlang der Schneidkante das gewünschte Arbeitsverhalten des Werkzeugs mit geringen Vibrationen, gutem Arbeitsergebnis und hoher Standzeit erreichen lässt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: Eine Ausführungsform eines erfindungsgemässen Schaftfräsers in einer Seitenansicht;
- Fig. 1b: eine Detailansicht einer Hauptschneidkante und der dahinterliegenden Freifläche;
- Fig. 2: eine Draufsicht auf die Stirnfläche des erfindungsgemässen Schaftfräsers;
- Fig. 3: eine schematische Darstellung des Zusammenwirkens des erfindungsgemässen Schaftfräsers mit einem Werkstück, der einwirkenden Kräfte im Vergleich mit einem Schaftfräser mit konstanter Breite der Hauptschneiden-Stützfase und der resultierenden maximalen Bauteilauslenkung; und
- Fig. 4: einen Vergleich der Kraft- und Biegemomentverläufe beim erfindungsgemässen Schaftfräser und dem Vergleichswerkzeug.

Grundsätzlich sind in den Figuren gleiche Teile mit gleichen Bezugszeichen versehen.

### Wege zur Ausführung der Erfindung

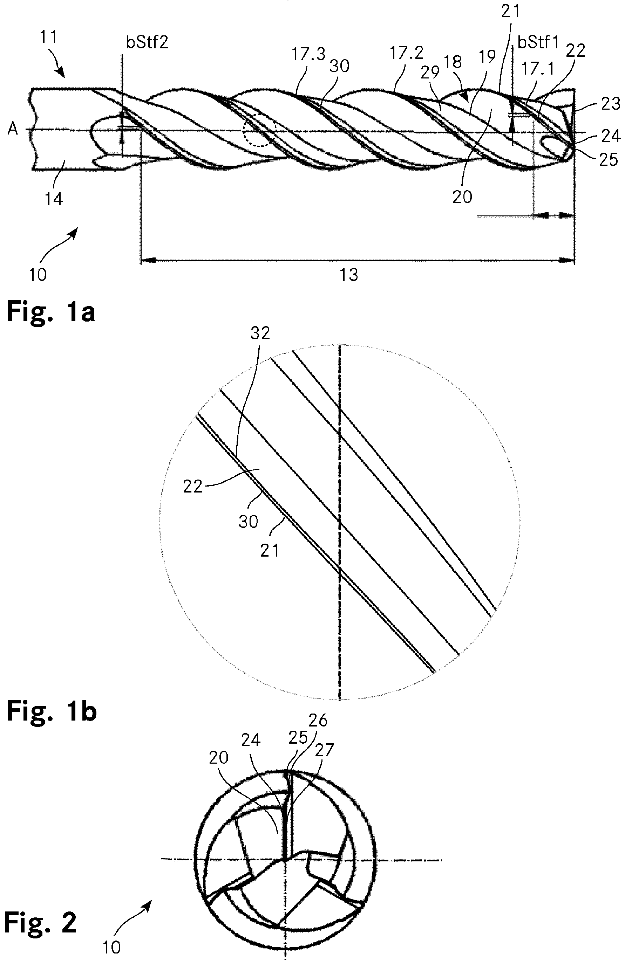

Die Figur 1a zeigt eine Ausführungsform eines erfindungsgemässen Schaftfräsers in einer Seitenansicht, die Figur 1b zeigt eine Detailansicht einer Hauptschneidkante und der dahinterliegenden Freifläche, dargestellt ist der im gestrichelten Kreis in der Figur 1a liegende Bereich.

Der Schaftfräser 10 ist insbesondere zum Schlichten, insbesondere von Werkstücken aus Aluminium und Aluminiumlegierungen, Kupfer und thermoplastischen Kunststoffen, geeignet. Er ist einstückig aus Hartmetall gefertigt. Er weist einen im Wesentlichen kreiszylindrischen Grundkörper 11 mit einer Längsachse A auf. Der Durchmesser des beispielhaft in den Figuren 1a, 1b gezeigten Grundkörpers beträgt 10 mm. In den Figuren ist das vordere (distale) Ende des Schaftfräsers 10 gezeigt mit dem Arbeitsbereich 13. Dahinter erstreckt sich ein Haltebereich 14, der beispielsweise in einem entsprechenden Futter einer Fräsmaschine aufgenommen und gehalten werden kann.

Die Länge des Arbeitsbereichs 13 beträgt beim dargestellten Beispiel 53.0 mm. Im Arbeitsbereich 13 sind drei wendelförmig verlaufende Schneidzähne 17.1, 17.2, 17.3 ausgebildet. Die Schneidenlänge beträgt beim dargestellten Werkzeug axial gemessen 53 mm, die Drallwinkel der drei Schneiden betragen 39.5°, 40° bzw. 41°. Im Folgenden wird exemplarisch der Schneidezahn 17.1 beschrieben, wobei sich von diesem der zweite Schneidzahn 17.2 und der dritte Schneidezahn 17.3 nur durch ihre azimutal um 120° bzw. 240° versetzte Anordnung am Werkzeug 10 und die erwähnten unterschiedlichen Drallwinkel unterscheiden. In Drehrichtung des Werkzeugs 10 ist vor dem Schneidezahn 17.1 eine Spannut 18 ausgestaltet. Eine Innenwandung 19 der Spannut 18 umfasst dabei eine Spanfläche 20 des Schneidezahns 17.1 sowie eine Rückseite 29 des davor angeordneten Schneidezahns 17.2. Der Spanwinkel beträgt 20°.

Eine radial am weitesten von der Längsachse A entfernte wendelförmige Kante am Schneidezahn 17.1 bildet eine Hauptschneide 21 des Werkzeugs 10. Bezüglich der Drehrichtung hinter der Hauptschneide 21 ist eine Freifläche 22 ausgebildet, welche sich in der Mantelregion des Arbeitsbereichs 13 ausgehend von der Hauptschneide 21 über ca. 15° in azimutaler Richtung erstreckt. Ein radialer Abstand der Oberfläche der Freifläche 22 von der Längsachse A nimmt dabei mit zunehmendem azimutalen Abstand von der Hauptschneide 21 stetig ab. An einem arbeitsbereichsseitigen (distalen) Längsende 23 des Werkzeugs 10 ist stirnseitig, zur Hauptschneide 21 gehörig, eine Nebenschneide 24 ausgebildet, wobei die Spanfläche 20 auch als eine Spanfläche der Nebenschneide 24 wirkt. Die Hauptschneide 21 und die Nebenschneide 24 sind über einen Eckbereich 25 mit einem Krümmungsradius von 0.20 mm miteinander verbunden.

Auch die Nebenschneide 24 weist hinter der eigentlichen Schneidkante jeweils eine Radius-Freifläche 26 bzw. eine Neben-Freifläche 27 auf, wobei die Freifläche 22, die Radius-Freifläche 26 und die Neben-Freifläche 27 durchgängig und stufenlos ineinander übergehen.

Der Schaftfräser 10 weist eine Freiflächenfase 30 auf, welche längs der Hauptschneide 21 und der Nebenschneide 24 ausgebildet ist. Entlang der Hauptschneide 21 weist die Freiflächenfase 30 durchgehend einen Fasenwinkel von 1.5° auf, entlang der Nebenschneide 24 beträgt der Fasenwinkel 0.5°. Die Freiflächenfase 30 reicht bis an die Schneiden heran und geht an einer Kante 32 in die Freifläche 22 bzw. die Neben-Freifläche 27 über. Die Kante 32 ist scharf und weist eine geringe Schartigkeit auf, und bietet somit wenig Angriffspunkte für ein Ausbrechen bzw. Abbröckeln der Freiflächenfase 30 an der von den Schneiden abgewandten Begrenzung, d. h. am Übergang zur jeweiligen Freifläche. Für die Oberflächengüte der Freiflächenfase 30 gilt im gesamten Freiflächenfasenbereich Ra ≤ 0.1 µm.

Gemessen in einer lokalen Bezugsebene, welche senkrecht steht auf einer lokalen Tangente der Schneide, weist die Freiflächenfase 30 der Hauptschneide im vorderen, der Stirnseite benachbarten Teilbereich, gemessen bei einem axialen Abstand von 5 mm (d1/2) von der Stirn, eine Breite bStf1 von 90 µm auf. Im hinteren, dem Werkzeugschaft benachbarten Teilbereich, gemessen beim Schneidenende, beträgt die Breite bStf2 50 µm, wobei die Stützfasenbreite von der Stirnseite bis zum Schneidenende linear abnimmt. Bei der Nebenschneide 24 beträgt die Breite der Stirnfase 80 µm. Die Freiflächenfase 30 ist daher in der Darstellung der Figur 1a unverhältnismässig gross dargestellt, um die Anordnung der Freiflächenfase 30 an der Schneide zu verdeutlichen. Die Freiflächenfase wurde durch konventionelles Schleifen hergestellt. Aufgrund der unvermeidlichen Herstellungstoleranzen schwankt die Breite der Freiflächenfase etwas, die Toleranzen betragen (+ 10µm / 0). Die Freiflächenfase 30 ist derart ausgebildet, dass sie sich durchgängig und stufenlos hinter den einzelnen Schneiden erstreckt. Weder der Wert des Freiwinkels noch der Fasenbreite weist entlang der Schneide betrachtet Sprünge auf.

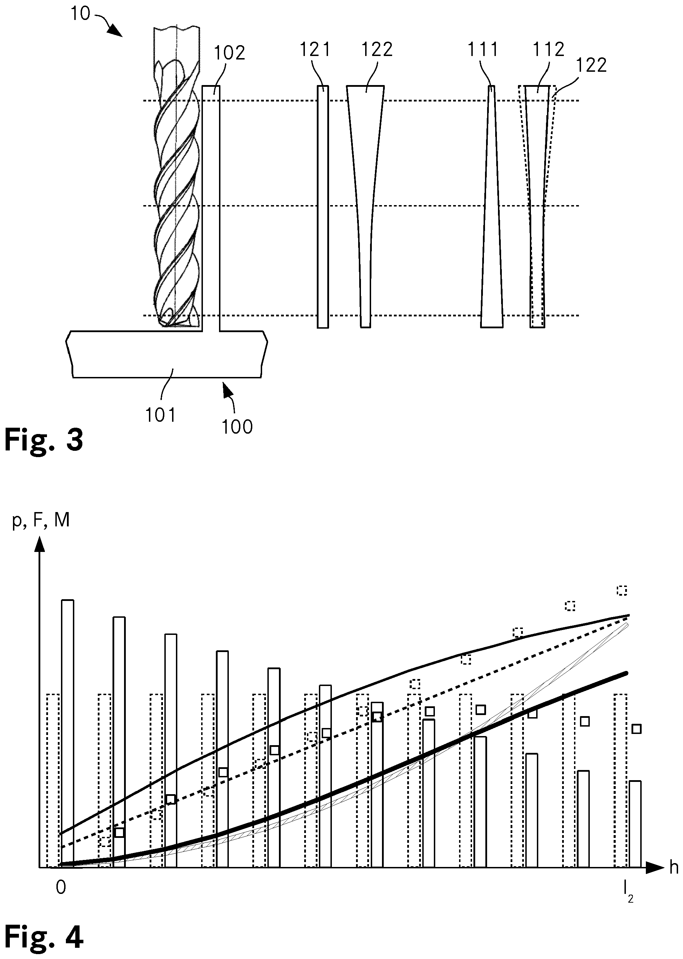

Die Figur 3 ist eine schematische Darstellung des Zusammenwirkens des erfindungsgemässen Schaftfräsers mit einem Werkstück und der einwirkenden Kräfte im Vergleich mit einem Schaftfräser mit konstanter Breite der Hauptschneiden-Stützfase. Die Figur 4 zeigt einen Vergleich der Kraft- und Biegemomentverläufe beim erfindungsgemässen Schaftfräser und dem Vergleichswerkzeug.

In der Figur 3 dargestellt ist der Schaftfräser 10, der mit einem Abschnitt eines Werkstücks 100 zusammenwirkt. Das Werkstück 100 umfasst im dargestellten Abschnitt eine Grundplatte 101 und einen Steg 102. Der Schaftfräser 10 wirkt bei der Bearbeitung mit seiner Stirnseite mit der Oberseite der Grundplatte 101 und mit seiner Mantelfläche mit einer der Seitenwände des Stegs 102 zusammen.

In der Figur 3 werden weiter die Verläufe des Schnittdrucks und der resultierenden maximalen Bauteilauslenkung, wie sie sich bei einem Vergleichswerkzeug mit konstanter Stützfasenbreite entlang der Hauptschneide und beim erfindungsgemässen Werkzeug ergeben, miteinander verglichen. Rechts neben der schematischen Darstellung des Schaftfräsers 10 und des Werkstücks 100 folgen der Verlauf 121 des Schnittdrucks und der Verlauf 122 der resultierenden maximalen Bauteilauslenkung entlang der Längsachse des Schaftfräsers 10 bzw. der Höhe des Stegs 102, jeweils für das Vergleichswerkzeug.

Beim Vergleichswerkzeug ist der erzeugte Schnittdruck entlang der Längsachse des Werkzeugs im Wesentlichen konstant. Der auf den Steg 102 einwirkende Schnittdruck ist also von der Höhe im Wesentlichen unabhängig. Wegen der entsprechenden Kräfte wird der Steg 102 vom Werkzeug weggedrückt. Aufgrund der Bauteilgeometrie ist die entsprechende Auslenkung in einer "labilen" Region des Stegs 102, die weiter entfernt ist von der Grundplatte 100, höher als in der "stabilen" Region des Stegs 102, die an die Grundplatte 101 angrenzt.

Ganz rechts folgen die Darstellungen für den erfindungsgemässen Schaftfräser 10. Hier ist die Stützfasenbreite, verglichen mit dem Vergleichswerkzeug, im stirnseitigen Bereich etwas grösser und im schaftseitigen Bereich kleiner, wobei die Stützfasenbreite von der Stirnseite bis zum Schaft im Wesentlichen linear abnimmt. Entsprechend nimmt auch der Schnittdruck ausgehend von der Stirnseite her in Richtung des Schafts ab, wie aus dem entsprechenden Verlauf 111 hervorgeht. Daraus ergeben sich geringere Einwirkkräfte in der labilen Region als in der stabilen Region des Stegs 102. Sowohl die lokalen Einwirkkräfte in der labilen Region als auch das resultierende Gesamtbiegemoment sind somit kleiner als beim Vergleichswerkzeug, auch wenn die gesamte Abstützkraft zwischen dem Werkstück 100 und dem Mantel des Schaftfräsers 10 im Wesentlichen unverändert bleibt. Entsprechend ergibt sich in der labilen Region die verringerte Bauteilauslenkung gemäss Verlauf 112, wobei der Verlauf 122 der maximalen Auslenkung bei der Bearbeitung mit dem Vergleichswerkzeug mit konstanter Stützfasenbreite zum Vergleich gestrichelt nochmals dargestellt ist.

In der Figur 4 werden die Kraft- und Biegemomentverläufe gestützt auf ein vereinfachtes rechnerisches Beispiel dargestellt. Der Verlauf des Schnittdrucks p wird durch Säulen repräsentiert, die den jeweiligen Druck entlang des Arbeitsbereichs, von der Stirn (Wert 0) bis zum Schneidenende (Wert l₂) an regelmässig beabstandeten Stellen angeben. Die durchgezogenen Balken beziehen sich auf das erfindungsgemässe Werkzeug, die gestrichelten Balken auf das Vergleichswerkzeug mit konstanter Stützfasenbreite entlang der Hauptschneiden. Wie aus den Balken ersichtlich ist, nimmt der Schnittdruck beim erfindungsgemässen Werkzeug mit wachsendem Abstand von der Stirn linear ab, während er beim Vergleichswerkzeug im Wesentlichen konstant ist. Der Schnittdruck ist beim erfindungsgemässen Werkzeug an der Stirn ca. 55% grösser als beim Vergleichswerkzeug, beim Schneidenende beträgt der Schnittdruck ca. 50% des Schnittdrucks beim Vergleichswerkzeug.

Summiert man die aufgrund des Schnittdrucks auf das Werkstück einwirkenden Kräfte F entlang der Steghöhe resultieren in den beiden Fällen die Kurven gemäss den dünnen Linien. Die gestrichelte Linie bezieht sich auf das Vergleichswerkzeug. Sie zeigt den linearen Zuwachs der einwirkenden Kraft aufgrund des konstanten Schnittdrucks. Die durchgezogene Linie bezieht sich auf das erfindungsgemässe Werkzeug. Die Steigung der entsprechenden quadratischen Funktion ist zunächst grösser, nimmt dann aber mit wachsender Höhe ab. Die Gesamtkraft beider Werkzeuge ist vergleichbar gross, d. h. die Abstützkraft zwischen Steg und Werkzeug ist bei beiden Schaftfräsern vergleichbar.

Weiter dargestellt in der Figur 4 sind mit kleinen Quadraten die Beiträge zu dem auf das Werkstück wirkenden Biegemoment in aufeinanderfolgenden Abschnitten des Stegs mit jeweils gleicher Länge, wobei vereinfachend davon ausgegangen wird, dass der Übergang zwischen der Grundplatte und dem Steg fix ist und eine hypothetische Biegeachse für die Auslenkung des Stegs bildet. Die Beiträge wachsen beim Vergleichswerkzeug aufgrund der konstanten Kräfte entlang der Steghöhe linear an (gestrichelte Quadrate). Beim erfindungsgemässen Werkzeug (durchgezogene Quadrate) ergibt sich zunächst ein Anstieg, dann ein leichter Rückgang der Biegemomentbeiträge.

Die dicken Linien stellen das sich ergebende summierte Biegemoment dar. Dieses steigt beim Vergleichswerkzeug erwartungsgemäss quadratisch mit der Steghöhe an (schraffierte Kurve). Beim erfindungsgemässen Werkzeug (durchgezogene Kurve) ergibt sich dagegen ein reduziertes Gesamt-Biegemoment. Es ist gut 20% tiefer als beim Vergleichswerkzeug.

### Beispiele

Eine Reihe von erfindungsgemässen Schaftfräsern mit unterschiedlichem Durchmesser d1, unterschiedlicher Schneidenlänge l2 und unterschiedlichem Radius r gemäss der nachfolgenden Tabelle wurden hergestellt. Die Zähnezahl betrug jeweils 3, die Drallwinkel jeweils 39.5°, 40° bzw. 41°. Die Freiflächenfase wurde jeweils durch konventionelles Schleifen erzeugt.

| **d1** [mm] | **l2** [mm] | **r** [mm] | **bStf1ₙₒₘ** [µm] | **bStf2ₙₒₘ** [µm] | **α₀[°]** | **bStfₙₒₘ (Stirn)** [µm] |
|---|---|---|---|---|---|---|
| 6 | 32 | 0.15 | 50 | 40 | 1.5 | 60 |
| 8 | 42 | 0.15 | 70 | 50 | 1.5 | 70 |
| 10 | 53 | 0.20 | 90 | 50 | 1.5 | 80 |
| 12 | 63 | 0.20 | 90 | 60 | 1.0 | 80 |
| 16 | 84 | 0.20 | 120 | 90 | 1.0 | 100 |
| 20 | 105 | 0.20 | 120 | 90 | 1.0 | 120 |
| 6 | 32 | 1.00 | 50 | 40 | 1.5 | 60 |
| 8 | 42 | 1.00 | 70 | 50 | 1.5 | 70 |
| 10 | 53 | 1.00 | 90 | 50 | 1.5 | 80 |
| 10 | 53 | 2.50 | 90 | 50 | 1.5 | 80 |
| 12 | 63 | 1.00 | 90 | 60 | 1.0 | 80 |
| 12 | 63 | 2.50 | 90 | 60 | 1.0 | 80 |
| 16 | 84 | 1.00 | 120 | 90 | 1.0 | 100 |
| 16 | 84 | 2.50 | 120 | 90 | 1.0 | 100 |
| 20 | 105 | 2.50 | 120 | 90 | 1.0 | 120 |

Die nominale Stützfasenbreite bStf1ₙₒₘ bezieht sich dabei auf einen axialen Abstand von d1/2 von der Stirn, die nominale Stützfasenbreite wird am schaftseitigen Schneidenende gemessen. Die Toleranz beträgt jeweils (+ 10 µm / 0) für die Stützfasenbreiten bStf und (+ 1° / 0°) für den Stützfasenwinkel α₀.

Die Tabelle zeigt Werte für die variable Stützfasenbreite der Hauptschneide, welche sich im Rahmen von Versuchen als optimal hinsichtlich Masshaltigkeit dünner Werkstückbereiche und erreichter Oberflächengüte herausgestellt haben.

Bei den Eckradiusfräsern geht die Stützfasenbreite bStfₙₒₘ (Stirn) der Nebenschneide im Radiusbereich in die Stützfasenbreite bStf1ₙₒₘ der Hauptschneide über. Entsprechendes gilt für den Fasenwinkel. Im Radiusbereich ergeben sich aus fertigungstechnischen Gründen allerdings grössere Abweichungen vom vorgegebenen Verlauf als im Bereich der Haupt- und Nebenschneiden.

Im Rahmen eines Vergleichsversuchs wurde das Ergebnis einer Bearbeitung mit dem erfindungsgemässen, oben im Zusammenhang mit den Figuren 1 und 2 beschriebenen Fräswerkzeug mit dem entsprechenden Ergebnis eines Vergleichswerkzeugs mit konstanter Stützfasenbreite verglichen. Das Vergleichswerkzeug wies im Wesentlichen dieselben Werkzeugparameter auf wie das erfindungsgemässe Fräswerkzeug und unterschied sich nur durch die unterschiedlich ausgebildete Stützfase an der Hauptschneide. Diese wies beim Vergleichswerkzeug eine konstante Breite von 60 µm auf, der Stützfasenwinkel betrug 0.5°.

Bearbeitet wurde ein Bauteil aus Aluminium 3.2315, in dem ein Steg mit einer Steglänge von 160 mm, einer Steghöhe von 53 mm (entsprechend der Länge des Arbeitsbereichs der Fräswerkzeuge) und einer Stegbreite von 3.2 mm bearbeitet wurde. Dazu wurde das Werkstück zunächst mit anderen Werkzeugen vorgefräst bzw. geschruppt, danach folgte das Schlichten mit dem erfindungsgemässen Fräswerkzeug bzw. dem Vergleichswerkzeug. In beiden Fällen wurden die Stegwände in zwei Schritten (Vorschlichten/Schlichten) jeweils beidseitig bearbeitet. Die entsprechenden Schnittdaten waren wie folgt:

| Schritt | aₚ [mm] | aₑ [mm] | V_{c} [m/min] | f_{z} [mm] | n [1/min] | v_{f} [mm/min] |
|---|---|---|---|---|---|---|
| 1 | 53 | 0.08 | 198 | 0.030 | 6300 | 567 |
| 2 | 53 | 0.03 | 141 | 0.025 | 4500 | 338 |

wobei die Parameter folgende Bedeutung haben:
aₚ: axiale Zustelltiefe
aₑ: radiale Zustelltiefe
v_{c}: Schnittgeschwindigkeit
f_{z}: Vorschub pro Zahn und Umdrehung
n: Drehzahl
v_{f}: Vorschub

Bei den bearbeiteten Werkstücken wurden dann die Oberflächengüte in einem Bereich nahe des Bodens (stabile Bauteilebene) und in einem Bereich nahe des oberen Endes des Stegs (labile Bauteilebene) sowie die erfahrene Auslenkung des Stegbereichs in der labilen Bauteilebene gemessen:

| Werkzeug | Oberflächengüte Ra/Rz [µm] | | max. Auslenkung [mm] |
|---|---|---|---|
| | stabil | labil | |
| erfindungsgemäss | 0.419/2.197 | 0.836/5.290 | 0.017 |
| Vergleich (konstante Stützfasenbreite) | 0.309/1.767 | 0.484/3.208 | 0.068 |

Die Parameter für die Oberflächengüte betreffen den arithmetischen Mittenrauwert Ra und die Rautiefe Rz. Die Oberflächengüte in der labilen Zone des Bauteils ist bei der variablen Stützfläche etwas schlechter. Sie entspricht aber gängigen Anforderungen.

Die Auslenkung des Bauteils beträgt beim Vergleichswerkzeug hingegen das Vierfache der Auslenkung beim erfindungsgemässen Werkzeug. Entsprechend ergibt sich auch eine deutlich schlechtere Masshaltigkeit des fertigen Bauteils.

Die Masshaltigkeit kann ausgehend vom Vergleichswerkzeug zwar verbessert werden, indem die Breite der Stützfase generell reduziert wird. Dies führt aber zu erheblich stärkeren Vibrationen. Diese führen zu einer reduzierten Standzeit des Werkzeugs oder erfordern eine komplexere Verfahrensabfolge.

Die Erfindung ist nicht auf das in den Figuren dargestellte Ausführungsbeispiel beschränkt. Insbesondere die Anzahl und Geometrie der Schneiden sowie die Dimensionen und Grössenverhältnisse der einzelnen Abschnitte des Werkzeugs können sich vom gezeigten Ausführungsbeispiel unterscheiden.

Zusammenfassend ist festzustellen, die Erfindung ein Vollfräswerkzeug schafft, das eine verbesserte Masshaltigkeit bei geringer Vibrationsentwicklung ermöglicht.

## Patentansprüche

1. Vollfräswerkzeug zur rotierenden Materialbearbeitung mit einem länglichen Werkzeugschaft, welcher einen Arbeitsbereich aufweist, in welchem Schneiden mit zugehörigen Spanflächen und bezüglich einer Drehrichtung hinter den Schneiden angeordnete Freiflächen vorhanden sind, wobei jede der Schneiden einen mantelseitigen Hauptschneidenbereich und einen stirnseitigen Nebenschneidenbereich umfasst, wobei an wenigstens einer Schneide im Hauptschneidenbereich auf der zugehörigen Freifläche eine Freiflächenfase ausgebildet ist, **dadurch gekennzeichnet, dass** im Hauptschneidenbereich eine Breite der Freiflächenfase ausgehend von einem vorderen Teilbereich bis zu einem an ein hinteres Ende des Arbeitsbereichs angrenzenden hinteren Teilbereich abnimmt.

2. Vollfräswerkzeug nach Anspruch 1, **dadurch gekennzeichnet, dass** ein Verhältnis der Breite der Freiflächenfase im hinteren Teilbereich zur Breite im vorderen Teilbereich 0.85 ist oder kleiner, insbesondere dass das Verhältnis im Bereich 0.5-0.8 liegt.

3. Vollfräswerkzeug nach Anspruch 1 oder 2, **dadurch gekennzeichnet, dass** ein Verhältnis der Breite der Freiflächenfase im vorderen Teilbereich zu einem Werkzeugdurchmesser 0.005-0.012 beträgt.

4. Vollfräswerkzeug nach einem der Ansprüche 1 bis 3, **dadurch gekennzeichnet, dass** die Breite der Freiflächenfase vom vorderen Teilbereich zum hinteren Teilbereich linear abnimmt.

5. Vollfräswerkzeug nach einem der Ansprüche 1 bis 4, **dadurch gekennzeichnet, dass** ein Freiwinkel der Freiflächenfase im Hauptschneidenbereich im Bereich von 0.5 bis 2.0° liegt, insbesondere im Bereich von 0.75 bis 1.75°.

6. Vollfräswerkzeug nach einem der Ansprüche 1 bis 5, **dadurch gekennzeichnet, dass** eine axiale Länge des Arbeitsbereichs mindestens das 4-fache eines Werkzeugdurchmessers beträgt.

7. Vollfräswerkzeug nach einem der Ansprüche 1 bis 6, **dadurch gekennzeichnet, dass** jede der Schneiden einen den Hauptschneidenbereich mit dem Nebenschneidenbereich verbindenden Radiusbereich umfasst und dass sich die Freiflächenfase über eine Freifläche des Radiusbereichs in die Freifläche des Nebenschneidenbereichs fortsetzt, wobei in einem Freiflächenfasenbereich, der sich vom Hauptschneidenbereich über den Radiusbereich bis in den Nebenschneidenbereich erstreckt, sowohl ein Freiwinkel der Freiflächenfase als auch eine Breite der Freiflächenfase jeweils gemessen in einer lokalen Bezugsebene, welche senkrecht steht auf einer lokalen Tangente der Schneide, einen stufenlosen Verlauf aufweisen.

8. Vollfräswerkzeug nach Anspruch 7, **dadurch gekennzeichnet, dass** für die Breite b der Freiflächenfase im gesamten Freiflächenfasenbereich die Beziehung
0.003 d1 < b < 0.015 d1
gilt, wobei d1 den Werkzeugdurchmesser des Vollfräswerkzeugs bezeichnet und wobei eine maximale Breite b der Freiflächenfase unabhängig vom Werkzeugdurchmesser den Wert von 200 µm nicht übersteigt.

9. Vollfräswerkzeug nach Anspruch 7 oder 8, **dadurch gekennzeichnet, dass** ein Freiwinkel der Freiflächenfase im Nebenschneidenbereich kleiner ist als im Hauptschneidenbereich, wobei insbesondere der Freiwinkel im Nebenschneidenbereich im Bereich von 0 bis 1.5° liegt.

10. Vollfräswerkzeug nach einem der Ansprüche 1 bis 9, **dadurch gekennzeichnet, dass** ein Freiwinkel eines an die Freiflächenfase angrenzenden Bereichs der Freifläche im gesamten Freiflächenfasenbereich grösser ist als der Freiwinkel der Freiflächenfase, insbesondere der Freiwinkel des angrenzenden Bereichs im Bereich von 6 bis 20° liegt.

11. Vollfräswerkzeug nach Anspruch 10, **dadurch gekennzeichnet, dass** der Freiwinkel des angrenzenden Bereichs im gesamten Freiflächenfasenbereich um nicht mehr als 4° variiert.

12. Verfahren zur Herstellung eines Vollfräswerkzeugs, insbesondere eines Vollfräswerkzeugs nach einem der Ansprüche 1 bis 11, bei welchem in einem Arbeitsbereich Schneiden mit zugehörigen Spanflächen und bezüglich einer Drehrichtung hinter den Schneiden angeordnete Freiflächen erzeugt werden, wobei jede der Schneiden einen mantelseitigen Hauptschneidenbereich und einen stirnseitigen Nebenschneidenbereich umfasst, wobei an wenigstens einer Schneide im Hauptschneidenbereich auf der zugehörigen Freifläche eine Freiflächenfase ausgebildet wird, **dadurch gekennzeichnet, dass** die Freiflächenfase derart erzeugt wird, dass im Hauptschneidenbereich eine Breite der Freiflächenfase ausgehend von einem vorderen Teilbereich bis zu einem an ein hinteres Ende des Arbeitsbereichs angrenzenden hinteren Teilbereich abnimmt.

13. Verfahren nach Anspruch 12, **dadurch gekennzeichnet, dass** die Freiflächenfase durch konventionelles Schleifen erzeugt wird.
